# EUROPEAN PATENT SPECIFICATION

(11) **EP 2 853 353 B1**
(45) Date of publication and mention of the grant of the patent: **04.10.2017**
(21) Application number: 14181871.6
(22) Date of filing: 22.08.2014
(51) Int. Cl.: B25F 5/00, H02P 1/16

(54) **Electric power tool**
Elektrisches Werkzeug
Outil électrique

(30) Priority: 25.09.2013 JP 2013198995
(43) Date of publication of application: 01.04.2015
(73) Proprietor: Panasonic Intellectual Property Management Co., Ltd., Osaka-shi, Osaka 540-6207 (JP)
(72) Inventor: Tsuruta, Naoki, Chuo-ku, Osaka 540-6207 (JP); Okada, Masaaki, Chuo-ku, Osaka 540-6207 (JP); Ikeda, Masaki, Chuo-ku, Osaka 540-6207 (JP)
(74) Representative: Appelt, Christian W.

(56) References cited:
- EP-A2- 2 127 824
- EP-A2- 2 524 773
- WO-A2-2013/137480

## Description

The present invention relates to an electric power tool that is actuated by a rechargeable battery.

In an electric power tool in which a bit is actuated by driving power of a motor, a large inrush current may be generated when the motor is started. To reduce the large inrush current, a soft start control, which gradually increases the voltage applied to the motor, has been proposed. A smaller load increases the inrush current. Japanese Laid-Open Patent Publication No. 2011-240441 describes an electric power tool including a load detection unit that changes the increase rate of the voltage applied to a motor based on the detected load amount. For example, when a small load is detected, the rotation produced by the motor is accelerated from null to a high speed within a short period. A similar tool is disclosed in European Patent Application EP 2127824. In a rechargeable battery, overdischarging occurs when the output voltage of a rechargeable battery excessively falls. This is a factor that shortens the life of the rechargeable battery. The inventors of the present invention have recognized that the soft start control described in Japanese Laid-Open Patent Publication No. 2011-240441 does not take into consideration the overdischarging of the rechargeable battery. Thus, it is the goal of the inventors to prevent or inhibit the occurrence of overdischarging in a rechargeable battery when a motor is started.

One aspect of the present invention is an electric power tool including a rechargeable battery, a motor, a detector configured to detect a parameter that affects a voltage drop of the rechargeable battery and output a detection signal corresponding to the detected parameter, a controller configured to receive the detection signal and generate a control signal in accordance with the detection signal, and a power switching unit operated in accordance with the control signal from the controller to switch between a situation in which the rechargeable battery supplies electric power to the motor and a situation in which the rechargeable battery stops supplying electric power to the motor. The controller is configured to control the power switching unit using a pulse width modulation (PWM) control signal when the electric power tool is activated. The controller is configured to change a duty ratio of the PWM control signal in accordance with the detection signal of the detector.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a block diagram of an electric power tool of a first embodiment;
Fig. 2 is a timing chart illustrating activation of the electric power tool of the first embodiment;
Fig. 3 is a timing chart illustrating activation of an electric power tool of a second embodiment; and
Fig. 4 is a timing chart illustrating activation of an electric power tool of a third embodiment.

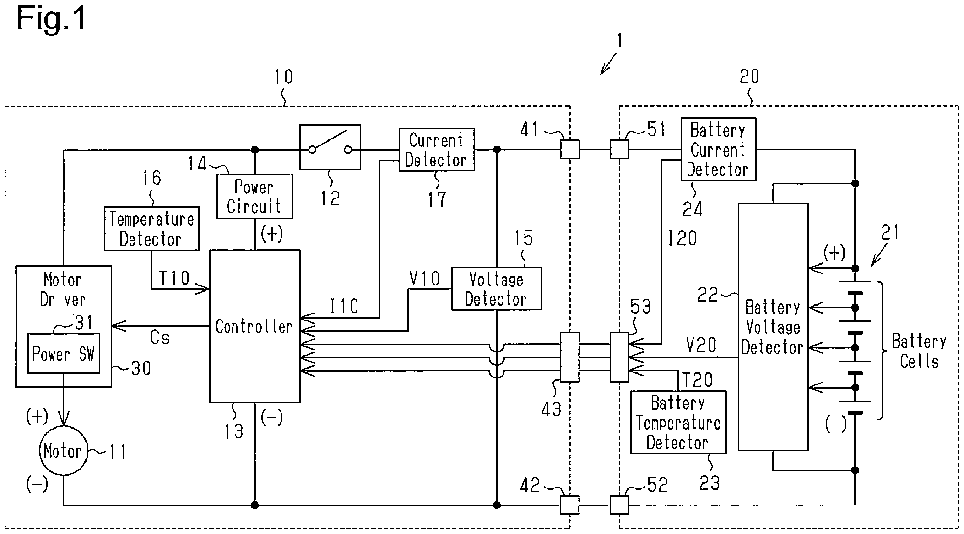

An electric circuit of an electric power tool 1 will now be described with reference to Fig. 1.

The electric power tool 1 is, for example, a drill driver. The electric power tool 1 includes an electric power tool main body 10 and a battery pack 20. Preferably, the electric power tool main body 10 and the battery pack 20 are structured to be attachable to and detachable from each other. The electric power tool 1 transmits torque through a bit attached to the electric power tool main body 10 (not shown in the drawings) to a task subject component. The task subject component is, for example, a screw or a bolt.

The electric power tool main body 10 includes a motor 11, a motor driver 30, an activation switch 12, a controller 13, a power circuit 14, a voltage detector 15, a temperature detector 16, and a current detector 17. The electric power tool main body 10 includes a positive terminal 41, a negative terminal 42, and a signal terminal 43. The motor driver 30 includes a power switching unit 31.

The activation switch 12 includes two terminals. The activation switch 12 is switched on and off. When the activation switch 12 is switched on, the two terminals of the activation switch 12 are closed. When the activation switch 12 is switched off, the two terminals of the activation switch 12 open.

The battery pack 20 may include a rechargeable battery 21, a battery voltage detector 22, a battery temperature detector 23, and a battery current detector 24. For example, the rechargeable battery 21 may include a plurality of cells connected in series. The rechargeable battery 21 may be a lithium-ion battery. The battery pack 20 includes a positive terminal 51, a negative terminal 52, and a signal terminal 53. When the battery pack 20 is attached to the electric power tool main body 10, the terminals 41, 42, and 43 of the electric power tool main body 10 are electrically connected to the terminals 51, 52, and 53 of the battery pack 20, respectively.

A positive terminal of the motor 11 is connected to the positive terminal 41 of the electric power tool main body 10 through the motor driver 30, the activation switch 12, and the current detector 17. A negative terminal of the motor 11 is connected to the negative terminal 42 of the electric power tool main body 10. A positive terminal of the controller 13 is connected to the positive terminal 41 of the electric power tool main body 10 through the power circuit 14, the activation switch 12, and the current detector 17. A negative terminal of the controller 13 is connected to the negative terminal 42 of the electric power tool main body 10. The controller 13 provides the motor driver 30 with a control signal Cs.

The current detector 17 detects an internal current of the electric power tool main body 10 and provides the controller 13 with a detection signal I10 based on the amount of the detected current. The internal current may be, for example, the current flowing from the positive terminal 41 of the electric power tool main body 10 to the negative terminal 42 of the electric power tool main body 10 through the activation switch 12. For example, the current detector 17 may be located between the positive terminal 41 of the electric power tool main body 10 and the motor driver 30.

The voltage detector 15 is connected between the positive terminal 41 and the negative terminal 42 of the electric power tool main body 10. The voltage detector 15 detects the voltage between the positive terminal 41 and the negative terminal 42 of the electric power tool main body 10, that is, the voltage provided by the rechargeable battery 21. Then, the voltage detector 15 provides the controller 13 with a detection signal V10 based on the detected voltage.

The temperature detector 16 detects the temperature of the electric power tool 1 and provides the controller 13 with a detection signal T10 based on the detected temperature. For example, the temperature detector 16 may be located in the proximity of the motor 11 to detect the temperature at the proximity of the motor 11.

A positive electrode of the rechargeable battery 21 is connected to the positive terminal 51 of the battery pack 20 through the battery current detector 24. A negative electrode of the rechargeable battery 21 is connected to the negative terminal 52 of the battery pack 20.

The battery current detector 24 detects the current output from the rechargeable battery 21 (also referred to as the battery current) and provides the controller 13 with a detection signal I20 based on the amount of the detected current through, for example, the signal terminals 53 and 43. In the illustrated example, the battery current detector 24 detects the current between the positive terminal 51 of the battery pack 20 and the rechargeable battery 21.

The battery voltage detector 22 is connected between the positive electrode of the rechargeable battery 21 and the negative electrode of the rechargeable battery 21. The battery voltage detector 22 is driven by the voltage generated with the rechargeable battery 21. The battery voltage detector 22 detects the voltage of each cell forming the rechargeable battery 21 and the voltage of the rechargeable battery 21, which is the total voltage of the cells, and provides the controller 13 with a detection signal V20 based on the detected voltages through the signal terminals 53 and 43.

The battery temperature detector 23 detects the internal temperature of the battery pack 20 and provides the controller 13 with a detection signal T20 through, for example, the signal terminals 53 and 43.

The operation of the electric power tool 1 shown in Fig. 1 will now be described.

The battery pack 20 provides the electric power tool main body 10 with electric power from the rechargeable battery 21 through the terminals 41 and 51 and the terminals 42 and 52. The electric power tool 1 is activated when a user switches on the activation switch 12.

When the activation switch 12 is switched on, the controller 13 is provided with the electric power from the power circuit 14 and starts to operate. The electric power or signal that is supplied to the controller 13 from the power circuit 14 when the activation switch 12 is switched on may be referred to as a motor start-up request.

The motor driver 30 provides the motor 11 with electric power in accordance with a control signal Cs from the controller 13. The motor 11 starts to generate rotation when supplied with electric power from the motor driver 30.

An inrush current flows to the motor 11 when the motor 11 is started and the rotation speed increases from null. The rechargeable battery 21 includes internal resistance. The voltage of the rechargeable battery 21 may drop depending on the amount of the inrush current generated during the activation of the motor 11.

The power switching unit 31 may include, for example, a field effect transistor (FET). The FET may be in a first state (for example, on state) or a second state (for example, off state). The FET switches between the first state and the second state in accordance with a control signal Cs from the controller 13. When the FET is in the first state, the power switching unit 31 supplies the motor 11 with electric power from the rechargeable battery 21. When the FET is in the second state, the power switching unit 31 stops supplying the motor 11 with electric power.

The controller 13 stores an overdischarge reference voltage to prevent or inhibit overdischarging of the rechargeable battery 21. Based on the detection signal V20 received from the battery voltage detector 22 and the overdischarge reference voltage, the controller 13 sets the power switching unit 31 to the second state when the voltage of the rechargeable battery 21 is less than the overdischarge reference voltage. This stops the supply of electric power to the motor 11, which in turn, stops generating rotation. Accordingly, further discharging of the rechargeable battery 21 is stopped.

When a user wishes to continuously uses the electric power tool 1 though the motor 11 has stopped generating rotation, the user first switches off the activation switch 12 and then switches on the activation switch 12 again. By performing such operations, the electric power tool 1 repeats the activation operation described above.

In the electric power tool 1, voltage drop caused by the internal resistance of the rechargeable battery 21 may be decreased by lowering the inrush current flowing to the motor 11 when the motor 11 is started. This prevents or inhibits the voltage of the rechargeable battery 21 from decreasing below the overdischarge reference voltage.

The control signal Cs of the controller 13 includes a pulse width modulation (PWM) control signal, which switches the FET of the power switching unit 31 between the first state and the second state. The PWM control signal includes a duty ratio, which is the ratio of the period when the FET is in the first state relative to a single cycle of a pulse signal between a high level and a low level. The amount of the electric power supplied to the motor 11 from the rechargeable battery 21 changes based on the duty ratio of the PWM control signal.

Based on a parameter that affects the voltage drop of the rechargeable battery 21, the controller 13 changes the duty ratio of the PWM control signal to be provided to the power switching unit 31 when the electric power tool 1 is activated to change the electric power supplied to the motor 11. The controller 13 employs battery temperature, which is indicated by the detection signal T20 of the battery temperature detector 23, as a parameter affecting the voltage drop of the rechargeable battery 21.

The internal resistance of the rechargeable battery 21 has a temperature dependency. For example, the internal resistance of the rechargeable battery 21 increases as the temperature of the rechargeable battery 21 increases. The detection signal T20 of the battery temperature detector 23, which corresponds to the temperature in the battery pack 20, may reflect the amount of the internal resistance of the rechargeable battery 21.

The controller 13 changes the duty ratio of the PWM control signal corresponding to the temperature in the battery pack 20 of which range is a normal temperature, a high temperature, or a low temperature. The range of the normal temperature in the battery pack 20 is, for example, between 5 and 35°C. The range of the high temperature is, for example, greater than 35°C. The range of the low temperature is, for example, less than 5°C.

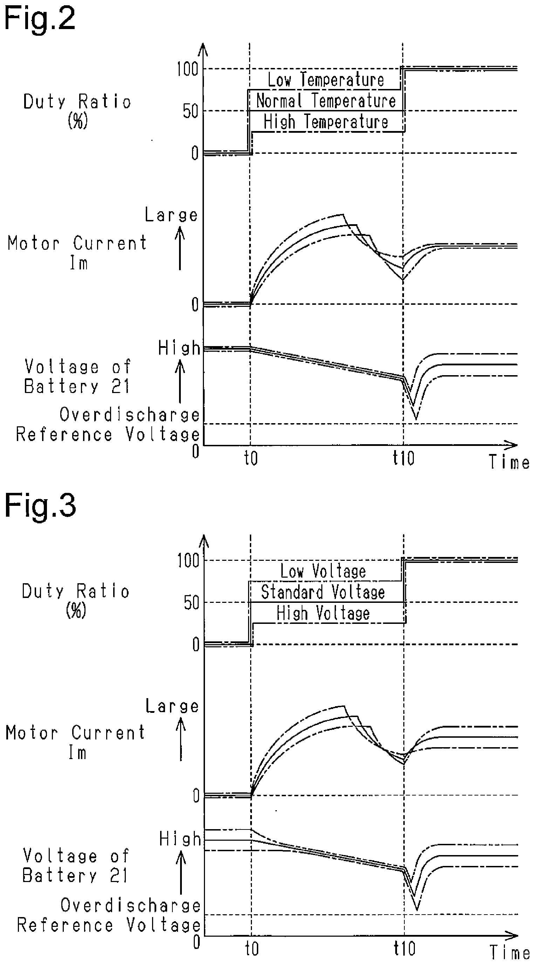

The activation of the electric power tool 1 will now be described with reference to Fig. 2. In Fig. 2, the waveforms in solid lines indicate the operation when the temperature of the battery pack 20 is normal, the waveforms in double-dashed lines indicate the operation when the temperature is high, and the waveforms in single-dashed lines indicate the operation when the temperature is low.

In accordance with the temperature of the battery pack 20 when the electric power tool 1 is activated at time t0, the controller 13 sets the duty ratio of the PWM control signal for a start-up period from time t0 to time t10. For example, the controller 13 sets the duty ratio of the PWM control signal to 50% when the temperature in the battery pack 20 is normal. The controller 13 sets the duty ratio of the PWM control signal to a value greater than 50% when the temperature in the battery pack 20 is low. The controller 13 sets the duty ratio of the PWM control signal to a value less than 50% when the temperature in the battery pack 20 is high. That is, the controller 13 sets the duty ratio of the PWM control signal in such a manner that inhibits the fluctuation of the voltage drop of the rechargeable battery 21 depending on the temperature. Time t0 may be when a user switches on the activation switch 12. Time t0 may be referred to as the motor start-up request time. The start-up period (t0-t10) may be referred to as the motor start-up period until which the duty ratio of the PWM control signal reaches 100%. In the motor start-up period (t0-t10), the electric power that is supplied to the motor 11 from the motor driver 30 may be referred to as the motor start-up power.

The start-up period ends at time t10. At time t10, the controller 13 sets the duty ratio of the PWM control signal to 100% and the FET of the power switching unit 31 to the first state.

During the start-up period, in which the rotation speed of the motor 11 gradually increases, the inrush current flows in correspondence with the rotation speed. As shown in Fig. 2, a motor current Im flowing to the motor 11 increases from the starting time t0 of the start-up period along a rising curve. The motor 11 generates electromotive force in correspondence with the rotation speed. The electromotive force of the motor 11 acts to decrease the inrush current. Thus, the motor current Im increases along the rising curve from the time t0 and then decreases. The motor current Im decreases as the rotation speed increases.

By setting the duty ratio of the PWM control signal for the start-up period, as shown in Fig. 2, the motor current Im is relatively large when the internal resistance of the rechargeable battery 21 is small and the temperature is low, and relatively small when the internal resistance of the rechargeable battery 21 is large and the temperature is high.

By setting the duty ratio of the PWM control signal to 100%, the motor current Im increases, and the rotation speed in the motor 11 increases. When the rotation speed in the motor 11 increases, an inrush current flows again. As shown in Fig. 2, the rotation speed of the motor 11 increases immediately after time t10. However, the rate of the increase is relatively small. Therefore, the inrush current flowing to the motor 11 immediately after the time t10 is smaller than the inrush current flowing to the motor 11 immediately after time t0.

The control of the duty ratio of the PWM control signal during the start-up period reduces the temperature dependency of the voltage drop of the rechargeable battery 21. As a result, the voltage of the rechargeable battery 21 during the start-up period remains the same regardless of the temperature. That is, even when the internal resistance changes as the temperature of the battery pack 20 changes, the amount of the voltage drop due to the internal resistance remains the same.

During the start-up period, the temperature dependency of the voltage drop is reduced and the inrush current is decreased. This inhibits excessive voltage drop of the rechargeable battery 21.

The electric power tool 1 has the advantages described below.
(1) The electric power tool 1 includes the controller 13 and the power switching unit 31. During the start-up period, the controller 13 performs PWM control on the power switching unit 31. The controller 13 changes the duty ratio of PWM control signal based on the detection signal T20 received from the battery temperature detector 23. The amount of the electric power supplied to the motor 11 changes in correspondence with the amount of the internal resistance of the rechargeable battery 21. This prevents or inhibits excessive voltage drop of the rechargeable battery 21 during the start-up period of the electric power tool 1. For example, even when the temperature in the battery pack 20 changes, overdischarging of the rechargeable battery 21 may be prevented or inhibited when the power tool 1 is activated.
(2) The controller 13 changes the duty ratio of the PWM control signal based on the detection signal T20 received from the battery temperature detector 23. This prevents or inhibits the voltage of the rechargeable battery 21 from decreasing below the overdischarge reference voltage. For example, forced suspension of the rotation in the motor 11 becomes limited immediately after start-up of the electric power tool 1. This limits interruptions resulting from forced operation suspension of the motor 11 and improves the working efficiency.
(3) The controller 13 sets the duty ratio of the PWM control signal for the start-up period to a large value when the temperature in the battery pack 20 is lower than the normal temperature. Thus, the rotation speed in the motor 11 increases when the battery pack 20 is in the low temperature. This improves the working efficiency when the temperature in the battery pack 20 is low.

An electric power tool 1 of a second embodiment will now be described. The controller 13 of the second embodiment changes the duty ratio of the PWM control signal during the start-up period based on the detection signal V10 of the voltage detector 15 instead of the detection signal T20 of the battery temperature detector 23.

The current including the motor current Im that flows to the electric power tool main body 10 changes in correspondence with the voltage applied between the terminal 41 and the terminal 42 of the electric power tool main body 10. An increase in the voltage increases the current flowing to the electric power tool main body 10.

The controller 13 employs voltage, which is indicated by the detection signal V10 of the voltage detector 15, as a parameter affecting the voltage drop of the rechargeable battery 21.

The amount of the current supplied by the rechargeable battery 21 is in correspondence with the voltage between the terminal 41 and the terminal 42, which is detected by the voltage detector 15. Thus, the detection signal V10 of the voltage detector 15 may reflect the internal resistance of the rechargeable battery 21 and/or the amount of the voltage drop.

The controller 13 changes the duty ratio of the PWM control signal in correspondence with whether the voltage of the rechargeable battery 21 is a standard voltage range, a high voltage range, or a low voltage range. For example, the standard voltage range is a range of ±10% of the standard voltage. The high voltage range is a range greater than the standard voltage range. The low voltage range is a range less than the standard voltage range.

In Fig. 3, the waveforms in solid lines indicate the operation when the voltage of the rechargeable battery 21 is standard, the waveforms in double-dashed lines indicate the operation when the voltage of the rechargeable battery 21 is high, and the waveforms in single-dashed lines indicate the operation when the voltage of the rechargeable battery 21 is low.

When the electric power tool 1 is activated at time t0, the controller 13 determines the voltage of the rechargeable battery 21 based on the detection signal V10 received from the voltage detector 15. Then, the controller 13 sets the duty ratio of the PWM control signal for the start-up period based on the detection signal V10 received from the voltage detector 15. For example, the controller 13 sets the duty ratio of the PWM control signal to 50% when the rechargeable battery 21 has the standard voltage. The controller 13 sets the duty ratio of the PWM control signal to a value less than 50% when the voltage of the rechargeable battery 21 is high. The controller 13 sets the duty ratio of the PWM control signal to a value greater than 50% when the voltage of the rechargeable battery 21 is low. That is, the controller 13 sets the duty ratio of the PWM control signal to limit changes in the voltage of the rechargeable battery 21 during the start-up period resulting from the voltage prior to time t0.

By setting the duty ratio of the PWM control signal for the start-up period as shown in Fig. 3, the motor current Im is large when the voltage of the rechargeable battery 21 is relatively low, and small when the voltage of the rechargeable battery 21 is relatively high.

For example, even when the voltage of the rechargeable battery 21 differs before the activation switch 12 is switched on at time t0, the voltage of the rechargeable battery 21 gradually converges to the same voltage by controlling the duty ratio of the PWM control signal based on the voltage of the rechargeable battery 21. That is, even when the voltage of the rechargeable battery 21 differs prior to time t0, the voltage of the rechargeable battery 21 during the start-up period remains the same.

Here, the duty ratio is controlled based on the voltage of the rechargeable battery 21 prior to the activation, and a re-inrush current is small. This limits excessive voltage drops in the rechargeable battery 21.

The electric power tool 1 has advantages (1) to (3) of the first embodiment.

An electric power tool 1 of a third embodiment will now be described. The controller 13 of the third embodiment changes the duty ratio of the PWM control signal during the start-up period based on the detection signal I20 of the battery current detector 24 instead of the detection signal T20 of the battery temperature detector 23.

During the start-up period, the motor current Im changes as the property of the motor 11 or the like vary. The change in the motor current Im changes the amount of the voltage drop of the rechargeable battery 21.

The controller 13 employs battery current, which is indicated by the detection signal I20 of the battery current detector 24, as a parameter affecting the voltage drop of the rechargeable battery 21.

The rechargeable battery 21 supplies the electric power tool main body 10 with current including the motor current Im. Therefore, the detection signal I20 of the battery current detector 24, which corresponds to the amount of the current flowing to the electric power tool main body 10, may reflect the internal resistance of the rechargeable battery 21 and/or the amount of the voltage drop.

The controller 13 changes the duty ratio of the PWM control signal in accordance with whether the current flowing to the electric power tool main body 10 is in a standard, large, or small range. For example, a standard current range is ±10% of the standard current of the electric power tool main body 10. The large current range is greater than the standard current range. The small current range is smaller than the standard current range.

When the electric power tool 1 is activated, the controller 13 determines the increase rate of the current flowing to the electric power tool main body 10 based on the detection signal I20 received from the battery current detector 24. Then, the controller 13 determines the amount of the current flowing to the electric power tool main body 10 based on the current increase rate. During the start-up period, the controller 13 changes the duty ratio of the PWM control signal based on the amount of the current flowing to the electric power tool main body 10, which is determined using the detection signal I20 of the battery current detector 24.

For example, the controller 13 sets the duty ratio of the PWM control signal to 50% when the amount of the current flowing to the electric power tool main body 10 is standard. The controller 13 sets the duty ratio of the PWM control signal to a value less than 50% when the amount of the current flowing to the electric power tool main body 10 is large. The controller 13 sets the duty ratio of the PWM control signal to a value greater than 50% when the amount of the current flowing to the electric power tool main body 10 is small. That is, the controller 13 sets the duty ratio of the PWM control signal to limit changes in the voltage drop of the rechargeable battery 21 that occur in accordance with the amount of the current flowing to the electric power tool main body 10.

During the start-up period, the duty ratio of the PWM control signal is controlled based on the amount of the current flowing to the electric power tool main body 10. As a result, the voltage of the rechargeable battery 21 remains the same regardless of the increase rate of the current flowing to the electric power tool main body 10 during the start-up period.

Here, the duty ratio is controlled based on the current flowing to the electric power tool main body 10 during the start-up period, and a re-inrush current is reduced. This limits excessive voltage drops in the rechargeable battery 21.

The electric power tool 1 has advantages (1) to (3) of the first embodiment.

An electric power tool 1 of a fourth embodiment differs from the electric power tool 1 of the first embodiment in the following aspect. The controller 13 of the first embodiment sets the duty ratio of the PWM control signal for the start-up period based on the detection signal T20 received from the battery temperature detector 23. In contrast, the controller 13 of the fourth embodiment continuously, or linearly, increases the duty ratio of the PWM control signal during the start-up period and changes the increase rate of the duty ratio based on the detection signal T20 of the battery temperature detector 23.

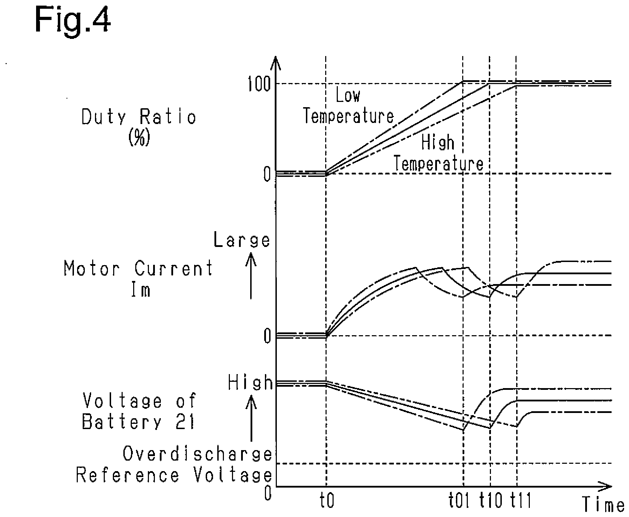

Fig. 4 shows an example of the operation that continuously increases the duty ratio of the PWM control signal during the start-up period when the temperature in the battery pack 20 varies. In Fig. 4, the waveforms in solid lines indicate the operation performed when the temperature of the battery pack 20 is normal, the waveforms in double-dashed lines indicate the operation when the temperature of the battery pack 20 is high, and the waveforms in single-dashed lines indicate the operation when the temperature of the battery pack 20 is low.

The controller 13 continuously increases the duty ratio of the PWM control signal in the range from 0% to 100% in accordance with the time elapsed from time t0, which is when the electric power tool 1 is activated. In the electric power tool 1, a drastic increase in the rotation speed of the motor 11 is limited by continuously increasing the duty ratio of the PWM control signal during the start-up period. This limits the flow of a large inrush current to the motor 11.

The controller 13 determines the temperature of the battery pack 20 at time t0, which is when the electric power tool 1 is activated, and sets the increase rate of the duty ratio of the PWM control signal in accordance with the temperature of the battery pack 20 detected at time t0. For example, the controller 13 sets the increase rate for the duty ratio of the PWM control signal to a larger value under a low temperature than under a normal temperature. For example, the controller 13 sets a smaller increase rate for the duty ratio of the PWM control signal at a high temperature than at a normal temperature. That is, the controller 13 sets the increase rate of the duty ratio of the PWM control signal to limit changes in the voltage drop of the rechargeable battery 21 caused by the temperature.

The length of the start-up period varies depending on the increase rate of the duty ratio of the PWM control signal. In the illustrated example, the start-up period ends when the duty ratio of the PWM control signal reaches 100%. When the temperature in the battery pack 20 is low, the duty ratio of the PWM control signal reaches 100% at time t01. Accordingly, the controller 13 shortens the start-up period (t0-t01). When the temperature in the battery pack 20 is high, the duty ratio of the PWM control signal reaches 100% at time t11. Accordingly, the controller 13 prolongs the start-up period (t0-t11).

During the start-up period, by setting the increase rate of the duty ratio of the PWM control signal based on the internal resistance of the rechargeable battery 21, the maximum motor current Im remains the same even when the temperature of the battery pack 20 changes.

The temperature dependency of the voltage drop of the rechargeable battery 21 is reduced during the start-up period. This stabilizes the amount of voltage drop even when the temperature of the battery pack 20 changes.

Here, the temperature dependency of the voltage drop during the start-up period and an inrush current are reduced. This limits excessive voltage drops in the rechargeable battery 21.

The electric power tool 1 of the fourth embodiment has the following advantage in addition to advantages (1) to (3) of the first embodiment.
(4) During the start-up period, the controller 13 continuously increases the duty ratio of the PWM control signal and determines the increase rate based on the detection signal indicating the operation parameter that affects the voltage drop of the rechargeable battery 21. Thus, in the electric power tool 1, during the start-up period, the inrush current of the motor 11 may be reduced in comparison with when the duty ratio of the PWM control signal is not continuously increased. This further effectively limits excessive voltage drops in the rechargeable battery 21 during the start-up period, and limits the occurrence of overdischarging of the rechargeable battery 21 during the start-up period.

It should be apparent to those skilled in the art that the present invention may be embodied in many other specific forms without departing from the spirit or scope of the invention. Particularly, it should be understood that the present invention may be embodied in the following forms.

In a modified example, the controller 13 may change the duty ratio of the PWM control signal for starting the motor 11 based on the detection signal T10 received from the temperature detector 16.

In a modified example, the controller 13 may change the duty ratio of the PWM control signal for starting the motor 11 based on the detection signal V20 received from the battery voltage detector 22.

In a modified example, the controller 13 may change the duty ratio of the PWM control signal for starting the motor 11 based on the detection signal I10 received from the current detector 17.

In a modified example, the controller 13 may change the duty ratio of the PWM control signal for starting the motor 11 based on the combination of the detection signals provided by at least two of the battery temperature detector 23, the voltage detector 15, the battery current detector 24, the temperature detector 16, the battery voltage detector 22, and the current detector 17.

In a modified example, the controller 13 may calculate the internal resistance of the rechargeable battery 21 based on the temperature in the battery pack 20 that is detected by the battery temperature detector 23, and set the duty ratio of the PWM control signal based on the calculated internal resistance.

In a modified example, the controller 13 may set the duty ratio of the PWM control signal based on the voltage of the rechargeable battery 21 that is detected by the voltage detector 15.

In a modified example, the controller 13 may set the duty ratio of the PWM control signal based on the current that is provided by the rechargeable battery 21 and detected by the battery current detector 24.

In a modified example, the controller 13 may set the duty ratio of the PWM control signal based on the temperature in the vicinity of the motor that is detected by the temperature detector 16.

In a modified example, the controller 13 may set the duty ratio of the PWM control signal based on the amount of the voltage of the rechargeable battery 21 that is detected by the battery voltage detector 22.

In a modified example, the controller 13 may set the duty ratio of the PWM control signal based on the amount of the current that flows to the electric power tool main body 10 and is detected by the current detector 17.

The disclosure further encompasses various example(s) described below.

[Clause 1] According to one embodiment, an electric power tool includes: a rechargeable battery; a motor; a motor driver connected to the motor; a detector configured to detect a parameter that affects a voltage drop of the rechargeable battery; and a controller connected to the detector and the motor driver to control the motor. The controller is configured to generate a pulse width modulation (PWM) control signal in accordance with the detected parameter, the PWM control signal having a duty ratio less than 100%. The controller is configured to provide the motor driver with the PWM control signal having the duty ratio less than 100% throughout a motor start-up period to start the motor. The controller is configured to provide the motor driver with the PWM control signal having a duty ratio of 100% when the motor start-up period ends.

[Clause 2] In the electric power tool according to clause 1, it is preferable that the controller is configured to: receive a motor start-up request, and that the controller is configured to generate, in response to the motor start-up request, the PWM control signal having a duty ratio corresponding to the parameter that is detected at the time of the motor start-up request.

[Clause 3] In the electric power tool according to clause 2, it is preferable that the controller generates the PWM control signal having a relatively large duty ratio when the parameter that is detected at the time of the motor start-up request indicates a relatively large voltage drop, and that the controller generates the PWM control signal having a relatively small duty ratio when the value of the parameter that is detected at the time of the motor start-up request indicates a relatively small voltage drop.

[Clause 4] In the electric power tool according to any one of clauses 1 to 3, it is preferable that the controller is configured to receive a motor start-up request, and set an increase rate of the duty ratio of the PWM control signal in accordance with the parameter detected at the time of the motor start-up request.

[Clause 5] In the electric power tool according to clause 4, it is preferable that the controller is configured to change the length of the motor start-up period depending on the increase rate of the duty ratio of the PWM control signal.

[Clause 6] In the electric power tool according to any one of clauses 1 to 5, it is preferable that the motor is arranged in an electric power tool main body, and the rechargeable battery is arranged in a battery pack that is attachable to the electric power tool main body, and it is preferable that the detector is at least one detector selected from the group consisting of a temperature detector arranged in the electric power tool main body, a temperature detector arranged in the battery pack, a voltage detector arranged in the electric power tool main body, a voltage detector arranged in the battery pack, a current detector arranged in the electric power tool main body, and a current detector arranged in the battery pack.

The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above description, various features may be grouped together to streamline the disclosure. This should not be interpreted as intending that an unclaimed disclosed feature is essential to any claim. Rather, inventive subject matter may lie in less than all features of a particular disclosed embodiment. The scope of the invention should be determined with reference to the appended claims, along with the full scope of equivalents to which such claims are entitled.

## Claims

1. An electric power tool (1) comprising:
a rechargeable battery (21);
a motor (11);
a detector (15, 16, 17, 23, 24, 25) configured to detect a parameter that affects a voltage drop of the rechargeable battery (21) and output a detection signal corresponding to the detected parameter;
a controller (13) configured to receive the detection signal and generate a control signal in accordance with the detection signal;
a power switching unit (31) operated in accordance with the control signal from the controller (13) to switch between a situation in which the rechargeable battery (21) supplies electric power to the motor (11) and a situation in which the rechargeable battery (21) stops supplying electric power to the motor (11), and
an activation switch (12) configured to be switched on and off, wherein the electric power tool (1) is activated when the activation switch (12) is turned on,
wherein the controller (13) is configured to:
control the power switching unit (31) using a pulse width modulation (PWM) control signal when the electric power tool is activated,
the electric power tool (1) being **characterized in that** the controller (13) is configured to:
set a duty ratio of the PWM control signal for a start-up period (t0-t10; t0-t01; t0-t11) in accordance with the detection signal of the detector (15, 16, 17, 23, 24, 25) corresponding to the parameter detected at a first time (t0), which is when the activation switch (12) is turned on, wherein the start-up period (t0-t10; t0-t01; t0-t11) is a period from the first time (t0) to a second time (t10; t01; t11) that is different from the first time (t0), and
set a duty ratio of the PWM control signal to 100% at the second time (t10; t01; t11).

2. The electric power tool (1) according to claim 1, wherein the detector (15, 16, 17, 23, 24, 25) is configured to detect at least one parameter selected from the group consisting of temperature of the electric power tool, voltage of the electric power tool, and current of the electric power tool.

3. The electric power tool (1) according to any one of the preceding claims, wherein
the controller (13) provides the power switching unit (31) with the PWM control signal having a duty ratio less than 100% throughout the start-up period (t0-t10; t0-t01; t0-t11), which is a motor start-up period (t0-t10) to start the motor (11), and
the controller (13) provides the power switching unit (31) with the PWM control signal having a duty ratio of 100% at the second time (t10; t01; t11), which is when the motor start-up period (t0-t10) ends.

4. The electric power tool (1) according to any one of the preceding claims, wherein the controller (13) is configured to
receive a motor start-up request at the first time (t0), and
generate, in response to the motor start-up request, the PWM control signal having a duty ratio corresponding to the parameter that is detected at the first time (t0) of the motor start-up request.

5. The electric power tool (1) according to claim 3, wherein the controller (13) is configured to receive a motor start-up request at the first time (t0), and set an increase rate of
the duty ratio of the PWM control signal in accordance with the parameter detected at
the first time (t0) of the motor start-up request.

6. The electric power tool (1) according to claim 5, wherein the controller (13) is configured to change the length of the motor start-up period (t0-t10; t0-t01; t0-t11) depending on the increase rate of the duty ratio of the PWM control signal.

7. The electric power tool (1) according to any one of the preceding claims, wherein
the motor (11) is arranged in an electric power tool main body (10),
the rechargeable battery (21) is arranged in a battery pack (20) that is attachable to the electric power tool main body (10), and
the detector (15, 16, 17, 23, 24, 25) is at least one detector selected from the group consisting of a temperature detector (16) arranged in the electric power tool main body (10), a temperature detector (23) arranged in the battery pack (20), a voltage detector (15) arranged in the electric power tool main body (10), a voltage detector (22) arranged in the battery pack (20), a current detector (17) arranged in the electric power tool main body (10), and a current detector (24) arranged in the battery pack (20).

## Patentansprüche

1. Elektrisches Werkzeug (1), das Folgendes umfasst:
Eine aufladbare Batterie (21) ;
einen Motor (11);
einen Detektor (15, 16, 17, 23, 24, 25), der ausgestaltet ist, um einen Parameter zu ermitteln, der einen Spannungsabfall der aufladbaren Batterie (21) beeinflusst, und um ein Ermittlungssignal auszugeben, das dem ermittelten Parameter entspricht;
eine Steuereinrichtung (13), die ausgestaltet ist, um das Ermittlungssignal zu empfangen und ein Steuersignal gemäß dem Ermittlungssignal zu erzeugen;
eine Leistungsschalteinheit (31), die gemäß dem Steuersignal von der Steuereinrichtung (13) betätigt wird, um zwischen einer Situation, in der die aufladbare Batterie (21) den Motor (11) mit elektrischem Strom versorgt, und einer Situation zu schalten, in der die aufladbare Batterie (21) das Versorgen des Motors (11) mit elektrischem Strom unterbricht, und
einen Aktivierungsschalter (12), der ausgestaltet ist, um ein- und ausgeschaltet zu werden, wobei das elektrische Werkzeug (1) aktiviert wird, wenn der Aktivierungsschalter (12) eingeschaltet wird,
wobei die Steuereinrichtung (13) für Folgendes ausgestaltet ist:
Steuern der Leistungsschalteinheit (31) unter Verwendung eines Pulsbreitenmodulationssteuersignals (PWM), wenn das elektrische Werkzeug aktiviert wird,
wobei das elektrische Werkzeug (1) **dadurch gekennzeichnet ist, dass** die Steuereinrichtung (13) für Folgendes ausgestaltet ist:
Einstellen einer relativen Einschaltdauer des Pulsbreitenmodulationssteuersignals für eine Anfahrperiode (t0-t10; t0-t01; t0-t11) gemäß dem Ermittlungssignal des Detektors (15, 16, 17, 23, 24, 25), das dem an einem ersten Zeitpunkt (t0) ermittelten Parameter entspricht, der der Zeitpunkt ist, an dem der Aktivierungsschalter (12) eingeschaltet wird, wobei die Anfahrperiode (t0-t10; t0-t01; t0-t11) eine Periode von dem ersten Zeitpunkt (t0) zu einem zweiten Zeitpunkt (t10; t01; t11) ist, der sich von dem ersten Zeitpunkt (t0) unterscheidet, und
Einstellen einer relativen Einschaltdauer des PWM-Steuersignals auf 100 % an dem zweiten Zeitpunkt (t10; t01; t11).

2. Elektrisches Werkzeug (1) nach Anspruch 1, wobei der Detektor (15, 16, 17, 23, 24, 25) ausgestaltet ist, um mindestens einen Parameter zu vermitteln, der von der Gruppe ausgewählt wird, die aus der Temperatur des elektrischen Werkzeugs, der Spannung des elektrischen Werkzeugs und dem Strom des elektrischen Werkzeugs besteht.

3. Elektrisches Werkzeug (1) nach einem der vorhergehenden Ansprüche, wobei die Steuereinrichtung (13) der Leistungsschalteinheit (31) das PWM-Steuersignal, das eine relative Einschaltdauer von weniger als 100 % aufweist, über die gesamte Anfahrperiode (t0-t10; t0-t01; t0-t11) hinweg bereitstellt, die eine Motoranfahrperiode (t0-t10) zum Starten des Motors (11) ist, und die Steuereinrichtung (13) der Leistungsschalteinheit (31) das PWM-Steuersignal, das eine relative Einschaltdauer von 100 % aufweist, an dem zweiten Zeitpunkt (t10; t01.; t11) bereitstellt, an dem die Motoranfahrperiode (t0-t10) endet.

4. Elektrisches Werkzeug (1) nach einem der vorhergehenden Ansprüche, wobei die Steuereinrichtung (13) für Folgendes ausgestaltet ist:
Empfangen einer Motoranfahranforderung an dem ersten Zeitpunkt (t0), und
Erzeugen des PWM-Steuersignals, das eine relative Einschaltdauer aufweist, die dem Parameter entspricht, der am ersten Zeitpunkt (t0) der Motoranfahranforderung ermittelt wird, als Reaktion auf die Motoranfahranforderung.

5. Elektrisches Werkzeug (1) nach Anspruch 3, wobei die Steuereinrichtung (13) ausgestaltet ist, um eine Motoranfahranforderung an dem ersten Zeitpunkt (t0) zu empfangen und eine Steigerungsrate der relativen Einschaltdauer des PWM-Steuersignals gemäß dem am ersten Zeitpunkt (t0) der Motoranfahranforderung ermittelten PWM-Steuersignal einzustellen.

6. Elektrisches Werkzeug (1) nach Anspruch 5, wobei die Steuereinrichtung (13) ausgestaltet ist, um die Länge der Motoranfahrperiode (t0-t10; t0-t01; t0-t11) in Abhängigkeit von der Steigerungsrate der relativen Einschaltdauer des PWM-Steuersignals zu ändern.

7. Elektrisches Werkzeug (1) nach einem der vorhergehenden Ansprüche, wobei der Motor (11) in einem Hauptkörper (10) des elektrischen Werkzeugs angeordnet ist,
wobei die aufladbare Batterie (21) in einem Batterie-Pack (20) angeordnet ist, der mit dem Hauptkörper (10) des elektrischen Werkzeugs verbunden werden kann, und
der Detektor (15, 16, 17, 23, 24, 25) mindestens ein Detektor ist, der von der Gruppe ausgewählt ist, die aus einem Temperaturdetektor (16), der in dem Hauptkörper (10) des elektrischen Werkzeugs angeordnet ist, einem Temperaturdetektor (23), der in dem Batterie-Pack (20) angeordnet ist, einem Spannungsdetektor (15), der in dem Hauptkörper (10) des elektrischen Werkzeugs angeordnet ist, einem Spannungsdetektor (22), der in dem Batterie-Pack (20) angeordnet ist, einem Stromdetektor (17), der in dem Hauptkörper (10) des elektrischen Werkzeugs angeordnet ist, und einem Stromdetektor (24) besteht, der in dem Batterie-Pack (20) angeordnet ist.

## Revendications

1. Outil électrique (1) comprenant :
une batterie rechargeable (21) ;
un moteur (11) ;
un détecteur (15, 16, 17, 23, 24, 25) configuré pour détecter un paramètre qui affecte une chute de tension de la batterie rechargeable (21) et délivrer un signal de détection correspondant au paramètre détecté ;
un contrôleur (13) configuré pour recevoir le signal de détection et générer un signal de commande conformément au signal de détection ;
une unité de commutation de puissance (31) mise en oeuvre conformément au signal de commande provenant du contrôleur (13) pour commuter entre une situation dans laquelle la batterie rechargeable (21) fournit la puissance électrique au moteur (11) et une situation dans laquelle la batterie rechargeable (21) cesse de fournir la puissance électrique au moteur (11), et
un commutateur d'activation (12) configuré pour être fermé et ouvert, dans lequel l'outil électrique (1) est activé lorsque le commutateur d'activation (12) est fermé,
dans lequel le contrôleur (13) est configuré pour :
commander l'unité de commutation de puissance (31) en utilisant un signal de commande de modulation de durée d'impulsion (PWM) lorsque l'outil électrique est activé,
l'outil électrique (1) étant **caractérisé en ce que** le contrôleur (13) est configuré pour :
établir un rapport cyclique du signal de commande de PWM pour une période de démarrage (t0-t10 ; t0-t01 ; t0-t11) conformément au signal de détection du détecteur (15, 16, 17, 23, 24, 25) correspondant au paramètre détecté à un premier instant (t0), qui est l'instant auquel le commutateur d'activation (12) est fermé, dans lequel la période de démarrage (t0-t10 ; t0-t01 ; t0-t11) est une période du premier instant (t0) à un deuxième instant (t10 ; t01 ; t11) qui est différent du premier instant (t0), et
établir un rapport cyclique du signal de commande de PWM à 100 % au deuxième instant (t10 ; t01 ; t11).

2. Outil électrique (1) selon la revendication 1, dans lequel le détecteur (15, 16, 17, 23, 24, 25) est configuré pour détecter au moins un paramètre sélectionné dans le groupe consistant en la température de l'outil électrique, la tension de l'outil électrique et le courant de l'outil électrique.

3. Outil électrique (1) selon l'une quelconque des revendications précédentes, dans lequel
le contrôleur (13) fournit, à l'unité de commutation de puissance (31), le signal de commande de PWM ayant un rapport cyclique inférieur à 100 % pendant toute la période de démarrage (t0-t10 ; t0-t01 ; t0-t11), qui est une période de démarrage de moteur (t0-t10) pour démarrer le moteur (11), et
le contrôleur (13) fournit, à l'unité de commutation de puissance (31), le signal de commande de PWM ayant un rapport cyclique de 100 % au deuxième instant (t10 ; t01 ; t11), qui est l'instant auquel la période de démarrage de moteur (t0-t10) se termine.

4. Outil électrique (1) selon l'une quelconque des revendications précédentes, dans lequel le contrôleur (13) est configuré pour :
recevoir une demande de démarrage de moteur au premier instant (t0), et
générer, en réponse à la demande de démarrage de moteur, le signal de commande de PWM ayant un rapport cyclique correspondant au paramètre qui est détecté au premier instant (t0) de la demande de démarrage de moteur.

5. Outil électrique (1) selon la revendication 3, dans lequel le contrôleur (13) est configuré pour recevoir une demande de démarrage de moteur au premier instant (t0), et établir un taux d'augmentation du rapport cyclique du signal de commande de PWM conformément au paramètre détecté au premier instant (t0) de la demande de démarrage de moteur.

6. Outil électrique (1) selon la revendication 5, dans lequel le contrôleur (13) est configuré pour changer la longueur de la période de démarrage de moteur (t0-t10 ; t0-t01 ; t0-t11) en fonction du taux d'augmentation du rapport cyclique du signal de commande de PWM.

7. Outil électrique (1) selon l'une quelconque des revendications précédentes, dans lequel
le moteur (11) est agencé dans un corps principal d'outil électrique (10),
la batterie rechargeable (21) est agencée dans un bloc de batteries (20) qui peut être attaché au corps principal d'outil électrique (10), et
le détecteur (15, 16, 17, 23, 24, 25) est au moins un détecteur sélectionné dans le groupe consistant en un détecteur de température (16) agencé dans le corps principal d'outil électrique (10), un détecteur de température (23) agencé dans le bloc de batteries (20), un détecteur de tension (15) agencé dans le corps principal d'outil électrique (10), un détecteur de tension (22) agencé dans le bloc de batteries (20), un détecteur de courant (17) agencé dans le corps principal d'outil électrique (10) et un détecteur de courant (24) agencé dans le bloc de batteries (20).
